# EUROPÄISCHE PATENTSCHRIFT

(11) **EP 1 319 357 B1**
(45) Veröffentlichungstag und Bekanntmachung des Hinweises auf die Patenterteilung: **26.10.2005**
(21) Anmeldenummer: 02027787.7
(22) Anmeldetag: 12.12.2002
(51) Int. Cl.: A47J 31/06, A47J 31/40

(54) **Vorrichtung zur Erzeugung von Schaum im Filter von Espresso-Kaffeemaschinen**
Apparatus for producing foam in the filter of an espresso coffee- machine
Dispositif de production de mousse dans le filtre d'une machine de café-espresso

(30) Priorität: 14.12.2001 ES 200103033
(43) Veröffentlichungstag der Anmeldung: 18.06.2003
(73) Patentinhaber: CELAYA, EMPARANZA Y GALDOS, INTERNACIONAL, S.A., 01013 Vitoria (Alava) (ES)
(72) Erfinder: Alday Lesaga, Francisco Javier, 01013 Vitoria Alava (ES)
(74) Vertreter: Feldkamp, Rainer

(56) Entgegenhaltungen:
- EP-A- 0 726 053
- EP-A- 1 016 364
- EP-A- 1 125 535
- DE-A- 3 035 157

## Beschreibung

Die Erfindung bezieht sich auf eine Vorrichtung zur Erzeugung von Schaum im Filter von Espresso-Kaffeemaschinen der im Oberbegriff des Anspruchs 1 genannten Art.

Derartige Espresso-Kaffeemaschinen oder Kaffeemaschinen mit Pumpe sind Kaffeemaschinen, die einen Innendruck erzeugen, mit dem heißes Wasser durch eine Menge an gemahlenem Kaffee hindurchgeleitet wird, die sich in einem Filter befindet, der an die Kaffeemaschine über einen dichten Verschluß angeschlossen ist und eine oder mehrere Auslässe für das Eingießen des erzeugten Kaffees aufweist.

Der genannte aufgeschäumte Kaffee oder Cremekaffee wird mit Hilfe einer Emulsion des Kaffeeaufgusses mit Luft gewonnen, was dadurch erreicht wird, daß dieser Kaffeeaufguß gezwungen wird, feine Kanäle unter Erhöhung seines Druckes zu durchqueren, worauf er nachfolgend entspannt wird. Auf diese Weise erreicht der Kaffeeaufguß nahezu einen Vernebelungszustand, der die Mischung mit Luft in sehr stark zerkleinertem Partikelteilchen begünstigt.

Es sind gewerbliche und Haushalts-Expresso-Kaffeemaschinen bekannt, die eine Vorrichtung aufweisen, die zur Erzielung des erwähnten aufgeschäumten Kaffees bestimmt sind, der auch als Cremekaffee bezeichnet wird. Diese Vorrichtung besteht grundlegend in einer Scheibe oder Membran, die mit einer Vielzahl von feinen Öffnungen versehen sind, durch die hindurch der frisch gewonnene Kaffeeaufguß strömen muß.

Ein Nachteil dieses Systems besteht darin, daß es keine Regelung der Menge des Schaumes ermöglicht. Dies ist nachteilig, ermöglicht keine Wahl zwischen Kaffee mit Schaum und Kaffee ohne Schaum, außer durch Anbringen oder Entfernen dieser Scheibe oder Membran, wobei bei eingebauter Scheibe oder Membran immer Kaffee mit Schaum und mit der gleichen Menge an Schaum erzeugt wird, während bei entfernter Scheibe oder Membran immer Kaffee ohne Schaum erzielt wird. Dies ist für eine Haushaltsanwendung mühsam, während für eine gewerbliche Anwendung diese Lösung in seiner Anwendung wenig geeignet ist oder es erfordert, einen der Filter der gewerblichen Espresso-Kaffeemaschine (in vielen Fällen hat man nur zwei) für die Gewinnung von aufgeschäumtem Kaffee zu reservieren, was in nachteiliger Weise die Bedienung zu den Spitzenzeiten beeinflußt.

Ein weiterer Nachteil besteht darin, daß die feinen Öffnungen der Scheibe oder Membran sehr leicht verstopft werden und daß es schwierig ist, sie unter Verwendung des unter Druck stehenden Wassers einwandfrei zu reinigen, das von der Kaffeemaschine selbst geliefert wird.

Weiterhin ist eine Vorrichtung bekannt, die für den gleichen Anmelder wie die vorliegende Erfindung patentiert ist, die in einer Ummantelung besteht, die an dem Boden des Gefäßes angekoppelt ist, das die Menge an gemahlenem Kaffee aufnimmt und die eine Serie von radialen Öffnungen aufweist, die ihren Innenraum mit dem Umfang verbinden; in das Innere dieser Ummantelung ist ein Regler eingeschraubt, der durch seine vertikale Verstellung in größerem oder kleinerem Ausmaß den Durchgang durch diese radialen Öffnungen der Ummantelung verschließt, wodurch die Erzeugung des Schaums in dem Kaffee von Null (Fehlen des Schaums, wenn die Öffnungen vollständig offen sind) bis zu einem Maximum an Schaum geregelt wird (wenn die Öffnungen mehr oder weniger vollständig soweit verschlossen sind, dass sie nicht mehr durchquert werden können.

Aus der EP-A-1016364 ist eine Vorrichtung zur Erzeugung von Schaum im Filter von Espresso-Kaffeemaschinen bekannt, die ein Gefäß aufweist, das eine Menge des gemahlenen Kaffees aufnimmt, wobei das Gefäß an seinem Boden ein Filterelement aufnimmt und mit einem Filterträger versehen ist, der mit Auslässen für den erzeugten Kaffee-Aufguß versehen ist. Ein mit der Unterseite des Gefäßes verbundener Körper bildet in seinem Inneren eine Kammer, die an ihrem oberen Ende mit dem Gefäß und den Auslässen des Filterträgers über eine Bohrung in der Mitte des Körpers verbunden ist. Eine in die Kammer eingeschraubte Hohlschraube weist an ihrem unteren Ende einen Auslass auf, und in den Hohlraum der Schraube beziehungsweise in der Kammer ist ein Mechanismus aus einer Kugel und einer Druckfeder in Axialrichtung zwischen dem Körper und der Schraube derart eingefügt, dass die Druckfeder vertikal zwischen der Schraube und der Kugel eingebaut ist, um durch entsprechendes stärkeres oder weniger starkes Einschrauben der Schraube in die Kammer und eine entsprechende Vorspannung der Druckfeder eine Regulierung der Schaummenge zu ermöglichen. Die Kammer ist ihrerseits von einer Auslaßdüse umgeben, die das untere Ende der Kammer und die darin eingeschraubte Hohlschraube abdeckt. Zur Änderung der Schaummenge ist es erforderlich, die Auslassdüse abzuschrauben und dann mit Hilfe irgendwelcher Werkzeuge die Schraube im inneren der Kammer zu verstellen. Dies stellt einen zusätzlichen Arbeitsaufwand dar, so das eine Einstellung der Schaummenge zumeist unterbleibt.

Der Erfindung liegt die Aufgabe zugrunde, eine Vorrichtung der eingangs genannten Art zu schaffen, die auf Filter von Espresso-Kaffeemaschinen anwendbar ist, damit der gewonnene Kaffee selektiv Schaum erhält, wobei außerdem die Menge dieses Schaums selektiv nach Wunsch des Verbrauchers einstellbar ist. Weiterhin soll diese Vorrichtung eine einfache Selbstreinigung mit dem gleichen unter Druck stehenden Wasser ermöglichen, das zur Erzielung des Aufgusses des Kaffees verwendet wird.

Diese Aufgabe wird durch die im Anspruch 1 angegebenen Merkmale gelöst.

Die erfindungsgemäße Vorrichtung zur Erzeugung von Schaum ist für Filter von Espresso-Kaffeemaschinen der eingangs genannten Art anwendbar, und sie besteht aus einem Körper, der auf der Unterseite des Gefäßes angekoppelt ist und der im Inneren eine Kammer bildet, in die vertikal eine Schraube eingeschraubt ist. Die Kammer weist jeweilige obere und untere Verbindungen mit dem Gefäß und den Ausgängen des Filterträgers auf, wobei die obere Verbindung der Kammer eine Bohrung in der Mitte des genannten Körpers ist, während die untere Verbindung der Kammer durch zumindest eine Öffnung der Schraube gebildet ist. In in dieser Kammer ist ein Mechanismus mit einer Kugel und einer Druckschraubenfeder angeordnet, die in Axialrichtung zwischen den Öffnungen des Körpers und der Schraube derart vorgesehen ist, daß diese Schraubendruckfeder vertikal zwischen der Schraube und der Kugel eingebaut ist. Die Kugel hat einen Durchmesser, der in geeigneter Weise größer als die Bohrung des Körpers ist, und sie wird gegen die untere Mündung dieser Bohrung angedrückt, wobei obere und untere Begrenzungseinrichtungen für das Einschrauben der Schraube in die Kammer vorgesehen sind.

In dieser erfindungsgemäßen Vorrichtung hängt die Menge des Schaums in dem Kaffee von der Festigkeit des Verschlusses ab, der von der Kugel gegenüber der Bohrung des Körpers der Vorrichtung bewirkt wird. Andererseits hängt (für einen vorgegebenen konstanten Austrittsdruck des Kaffeeaufgusses, der in dem Filterelement erzeugt wird) das Festigkeit des durch die Kugel hervorgerufenen Verschlusses von der elastischen Spannung der Schraubendruckfeder ab, und diese elastische Spannung hängt vom Ausmaß des Einschraubens der Schraube in diesen Körper ab.

Wenn sich die Schraube am unteren Ende ihres Betriebshubes befindet, nimmt die Schraubendruckfeder einen Zustand mit minimaler elastischer Spannung an, was dazu führt, daß der Austritt des Kaffeeaufgusses in einem minimalen Ausmaß durch den durch die Kugel hervorgerufenen Verschluß behindert wird, so daß der gewonnene Kaffee praktisch ohne Schaum oder Creme ist. In dem Ausmaß, in dem die Schraube bis zu ihrem oberen Anschlag ihres Betriebshubes eingeschraubt wird, wird die elastische Spannung der Schraubendruckfeder vergrößert, und der Kaffeeaufguß, der aus dem Filterelement austritt, muß eine zunehmend vergrößerte Festigkeit des von der Kugel hervorgerufenen Verschlusses überwinden, was zu einer zunehmend größeren Menge an Schaum führt.

Auf diese Weise ermöglicht diese Vorrichtung die Einstellung der Menge an Schaum nach Wunsch des Verbrauchers in einer einfachen präzisen, zuverlässigen und wirtschaftlichen Weise. Andererseits ermöglicht diese Konstruktion eine wirkungsvolle Reinigung unter Verwendung des unter Druck stehenden Wassers selbst, das in der Espresso-Kaffeemaschine für die Erzeugung des Kaffeeaufgusses verwendet wird; dieser Selbstreinigungsvorgang wird selbstverständlich in der Position mit minimalem Verschluß ausgeführt, bei dem sich die Schraube an dem unteren Ende ihres Betriebshubes befindet.

Eine bevorzugte Ausführungsform, die lediglich eine erläuternde und nicht beschränkende Eigenart hat, ist in den beigefügten Zeichnungen dargestellt.

Die Figur 1 ist eine Ansicht, die eine Ausführungsform der Vorrichtung gemäß der Erfindung in betriebsmäßigem Einbau und bei Betrachtung im Schnitt entlang einer vertikalen diametralen Ebene der Vorrichtung zeigt.

Die Figuren 2 bis 5 ergeben insgesamt eine auseinandergezogene Ansicht der erfindungsgemäßen Vorrichtung nach Figur 1. Die Figur 2 entspricht dem Körper (4), die Figur 3 der Schraube (6), die Figur 4 der Kugel (9) und die Figur 5 der Schraubendruckfeder (10).

Die Figur 6 ist eine Ansicht von unten, die der Schraube (6) entspricht, wie sie in Figur 3 dargestellt ist.

In diesen Figuren sind die folgenden Bezugsziffern angegeben:
1.- Gefäß
2.- Filterelement
3.- Filterträger
4.- Körper
5.- Kammer
6.- Schraube
7.- Bohrung des Körpers (4)
8.- Öffnung der Schraube (6)
9.- Kugel
10.- Schraubendruckfeder

In den Figuren ist eine schematische Darstellung einer bevorzugten Ausführungsform der erfindungsgemäßen Vorrichtung für eine Anwendung auf Filter gezeigt, die aus einem Gefäß (1) bestehen, das die Menge des gemahlenen Kaffees aufnimmt, wobei dieses Gefäß an seinem Boden das eigentliche Filterelement (2) trägt, das in dem entsprechenden Filterträger (3) angeordnet ist, der mit Austrittsöffnungen für den erzeugten Kaffeeaufguß versehen ist und wobei das Gefäß mit der Espresso-Kaffeemaschine verbunden ist.

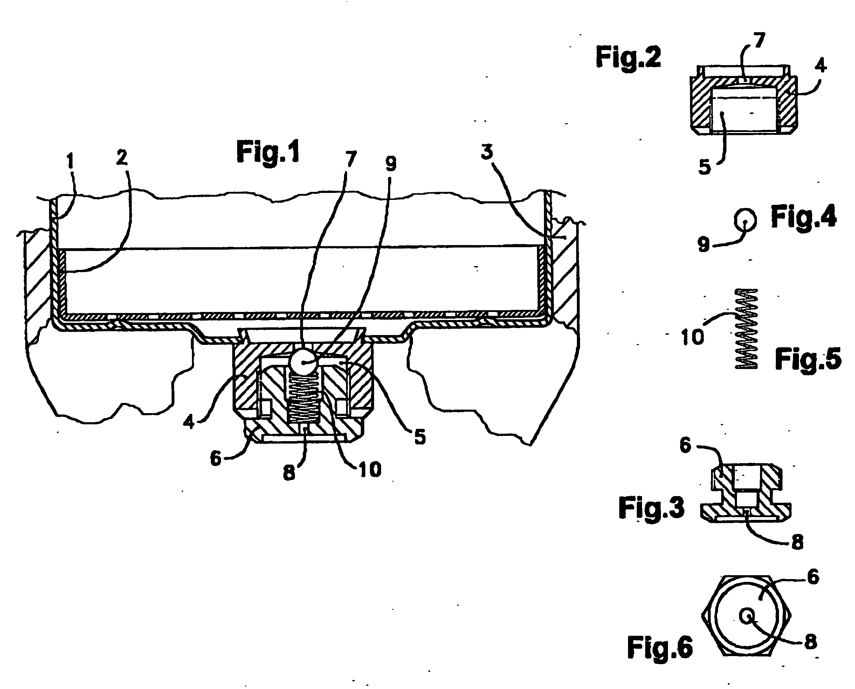

Wie aus der Darstellung nach Figur 1 zu erkennen ist, besteht diese Vorrichtung aus einem Körper (4), der an der Unterseite des Gefäßes 1 befestigt ist und der in seinem Inneren eine Kammer (5) bildet, in die in Vertikalrichtung eine Schraube (6) eingeschraubt ist. Die Kammer (5) weist jeweilige obere und untere Verbindungen mit dem Kessel (1) und mit den Auslaßöffnungen des Filterträgers (3) auf, wobei die obere Verbindung der Kammer (5) eine Bohrung (7) in der Mitte des Körpers (4) ist, und die untere Verbindung der Kammer (5) durch zumindest eine Öffnung (8) der Schraube (6) gebildet ist. In dieser Kammer (5) ist ein Mechanismus aus einer Kugel (9) und einer Schraubendruckfeder (10) angeordnet, der in Axialrichtung zwischen dem Körper (4) und der Schraube (6) derart angeordnet ist, daß die Schraubendruckfeder (10) in Vertikalrichtung zwischen der Schraube (6) und der Kugel (9) eingebaut ist. Die Kugel hat einen Durchmesser, der in zweckmäßiger Weise größer als der Durchmesser der Bohrung (7) des Körpers (4) ist, wobei die Kugel gegen die untere Mündung der Bohrung (7) anliegt und obere und untere Begrenzungseinrichtungen für das Einschrauben der Schraube (6) in die Kammer (5) vorgesehen sind. Die Figuren 2 bis 6 zeigen getrennt die Bestandteile der erfindungsgemäßen Vorrichtung zur besseren Klarheit; in Figur 6 ist insbesondere zu erkennen, daß die Schraube (6) einen außenliegenden Sechskantkopf aufweist, der deren Handhabung zur Einstellung der Schaummenge erleichtert. In Figur 1 ist außerdem zu erkennen, daß die Verbindung des Körpers (4) mit dem Gefäß (1) durch Umbördeln seines zylindrischen oberen Kranzes erfolgt (Figur 2).

Die Funktionsweise der Vorrichtung ergibt sich ohne weiteres aus der in Figur 1 dargestellten Anordnung. In dieser Figur 1 ist die Vorrichtung in der Betriebsstellung dargestellt, die der maximalen Erzeugung von Schaum entspricht, weil die Schraube (6) sich am oberen Anschlag ihres Betriebshubes befindet, wobei die Schraubendruckfeder (10) ihre maximale elastische Spannung aufweist, was dazu führt, daß die Kugel (9) auf die Bohrung (7) ein maximales Ausmaß an Verschluß (jedoch niemals vollständig) gegenüber dem Druck ausübt, mit dem der Kaffeeaufguß das Filterelement (2) verläßt. Beim Herausschrauben der Schraube (6) gelangt diese bis an ihren unteren Anschlag des Betriebshubes, wobei die elastische Spannung der Schraubendruckfeder (10) verringert wird, was dazu führt, daß das Ausmaß des Verschlusses der Bohrung (7) durch die Kugel (9) gegenüber dem Austrittsdruck des Kaffeeaufgusses aus dem Filterelement kleiner wird, so daß zunehmend weniger Schaum erzeugt wird.

Wie dies bereits angegeben wurde, erfolgt die Selbstreinigung der Vorrichtung durch das gleiche unter Druck stehende Wasser, das für die Espresso-Kaffeemaschine erzeugt wird, und zwar in der unteren Position des Betriebshubes der Schraube.

## Patentansprüche

1. Vorrichtung zur Erzeugung von Schaum im Filter von Espresso-Kaffeemaschinen, insbesondere für Filter, die durch ein Gefäß (1) gebildet sind, das eine Menge des gemahlenen Kaffees aufnimmt, wobei das Gefäß an seinem Boden das eigentliche Filterelement (2) aufnimmt und mit dem entsprechenden Filterträger (3) versehen ist, der mit Auslässen für den erzeugten Kaffeeaufguß versehen ist und der mit der Espresso-Kaffeemaschine verbunden ist, mit:
einem Körper (4), der mit der Unterseite des Gefäßes (1) verbunden ist und in seinem Inneren eine Kammer (5) bildet, die an ihrem oberen Ende mit dem Gefäß (1) über eine Bohrung (7) in der Mitte des Körpers (4) verbunden_ist,
einer in Vertikalrichtung in die Kammer (5) eingeschraubten Schraube (6), wobei ein unterer Auslass der Kammer (5) durch zumindest eine Öffnung (8) der Schraube (6) gebildet ist, und
einem in der Kammer (5) angeordneten Mechanismus aus einer Kugel (9) und einer Schraubendruckfeder (10), die in Axialrichtung zwischen den Körper (4) und der Schraube (6) derart eingefügt ist, daß die Schraubendruckfeder (10) vertikal zwischen der Schraube (6) und der Kugel (9) eingebaut ist, die einen in geeigneter Weise größeren Durchmesser als die Bohrung (7) des Körpers (4) aufweist und gegen die untere Mündung der Bohrung (7) angepreßt wird,
**dadurch gekennzeichnet, daß** obere und untere Begrenzungseinrichtungen für das Einschrauben der Schraube (6) in die Kammer (5) und aus dieser heraus vorgesehen sind, und daß die Schraube (6) einen außenliegenden Sechskantkopf zur Erleichterung der Einstellung der von der Vorrichtung erzeugten Schaummenge aufweist.

## Claims

1. A device for producing foam in the filter of expresso coffee machines, in particular for filters which are formed by a container (1) which receives an amount of 5the ground coffee, wherein at its bottom the container receives the actual filter element (2) and is provided with the corresponding filter carrier (3) which is provided with outlets for the coffee infusion produced and which is connected to the expresso coffee machine, comprising:
a body (4) which is connected to the underside of the container (1) and which in its interior forms a chamber (5) which at its upper end is connected to the container (1) by way of a bore (7) in the centre of the body (4),
a screw (6) screwed into the chamber (5) in the vertical direction, wherein a 15lower outlet of the chamber (5) is formed by at least one opening (8) of the screw (6), and
a mechanism arranged in the chamber (5) and comprising a ball (9) and a compression coil spring (10) which is inserted in the axial direction between the body (4) and the screw (6) in such a way that the compression coil spring (10) is fitted vertically between the screw (6) and the ball (9) which is of a diameter which is suitably larger than the bore (7) of the body (4) and is pressed against the lower mouth opening of the bore (7),
**characterised in that** there are provided upper and lower limiting devices for screwing the screw (6) into and out of the chamber (5) and that the screw (6) has an external hexagonal head for facilitating adjustment of the amount of foam produced by the device.

## Revendications

1. Dispositif de production de mousse dans le filtre des machines à café expresso, en particulier pour des filtres 5qui sont formés par un réservoir (1) qui reçoit une quantité de café moulu, le réservoir (1) recevant dans son fond l'élément filtre (2) proprement dit et étant muni d'un porte-filtre (3) correspondant, qui comporte des sorties pour le café liquide préparé et qui est assemblé à la machine à café expresso, comportant :
un corps (4), qui est assemblé avec la face inférieure du réservoir (1) et dont le volume intérieur forme une chambre (5) dont l'extrémité supérieure communique avec le réservoir (1) par l'intermédiaire d'une forure (7), ménagée au milieu du corps (4),
une vis (6), vissée dans la direction verticale à l'intérieur de la chambre (5), une sortie inférieure de la chambre (5) étant formée par au moins une ouverture (8) de la vis (6),
un mécanisme agencé dans la chambre (5), lequel est formé par une bille (9) et un ressort cylindrique de pression (10) et lequel est introduit dans la direction axiale entre le corps (4) et la vis (6), de telle sorte que le ressort cylindrique de pression (10) est monté verticalement entre la vis (6) et la bille (9) qui, de manière appropriée, a un diamètre plus grand que le diamètre de la forure (7) dans le corps (4) et qui est poussée contre l'ouverture inférieure de la forure (7),
**caractérisé en ce qu'**il est prévu des dispositifs de butée supérieur et inférieur limitant le vissage de la vis (6) dans la chambre (5) et hors de celle-ci, et **en ce que** la vis (6) comporte une tête à six pans extérieurs, en vue de faciliter le réglage de la quantité de mousse produite par le dispositif.
